# EUROPEAN PATENT SPECIFICATION

(11) **EP 2 886 857 B1**
(45) Date of publication and mention of the grant of the patent: **21.06.2017**
(21) Application number: 13382516.6
(22) Date of filing: 17.12.2013
(51) Int. Cl.: F03D 80/50, F03D 80/70

(54) **Wind turbine hub**
Windturbinennabe
Moyeu d'éolienne

(43) Date of publication of application: 24.06.2015
(73) Proprietor: Alstom Renovables España, S.L., 08005 Barcelona (ES)
(72) Inventor: Lázaro, Ricardo, 08017 BARCELONA (ES); Esteban, Laia, 08917 BADALONA (ES)
(74) Representative: ZBM Patents - Zea, Barlocci & Markvardsen

(56) References cited:
- EP-A1- 2 505 822
- EP-A1- 2 623 772
- WO-A1-03/019004
- WO-A1-2004/090326
- US-A1- 2012 027 602

## Description

The present invention relates to a hub to be mounted on a wind turbine and to a wind turbine comprising such a hub.

### BACKGROUND ART

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly or through the use of a gearbox. This way, the generator produces electricity which can be supplied to the electrical grid.

EP2505822 A1 discloses a wind turbine comprising a hub carrying a plurality of blades, the hub being rotatably mounted on a frame, the frame extending forward into the hub. The hub is mounted on the frame through suitable bearings arranged at a front end and a rear end of the hub. The hub comprises a substantially tubular inner stiffening structure arranged between the front end and the rear end of the hub, coaxially arranged around the frame.

These bearings and possibly other components related to them, such as e.g. components associated with the lubrication of the bearings, may require inspection, repair or periodic replacement for e.g. planned maintenance reasons and/or occasionally in case turbine malfunction is noticed.

A drawback of the tubular stiffening structure of EP2505822 A1 may be that there may be relatively little space between the frame and the tubular stiffening structure, which may not permit the access (by e.g. maintenance personnel) from inside the hub to components in the vicinity of the bearings (through which the hub is mounted on the frame). At the very least, it makes the access to the bearings and associated systems (e.g. lubrication systems) very complicated, thus increasing operational costs and risks for the personnel.

The present invention aims at resolving at least some of the previous problems.

### SUMMARY OF THE INVENTION

In a first aspect, the present invention provides a hub to be mounted on a wind turbine having a frame to be surrounded by the hub. The hub comprises a front bearing seat and a rear bearing seat for rotatably mounting the hub on the frame through respective front and rear bearings, such that the frame is provided at least partially internally of the hub. The hub further comprises a plurality of beams connecting the front bearing seat and the rear bearing seat.

This configuration of front and rear bearings may require a certain stiffness to maintain the bearings non deformable and therefore prevent bearing rings to run out of true. Misalignment or misadjustment may increase the contact pressure of corresponding rollers. A suitable stiffness may also be required to maintain the relative position between the front and rear bearing seats and therefore prevent misalignment of the bearings, i.e. loss of their concentricity relative to the rotating axis, which e.g. may also increase the contact pressure of the rollers.

The proposed beams connecting the front and rear bearing seats may provide the required stiffness to this bearing seats configuration so as to substantially prevent both the bearing rings to run out of true and the misalignment of the bearing seats.

Access (by e.g. maintenance personnel) from inside the hub to the vicinity of the front and rear bearings may also be required. This access may enable or at least facilitate e.g. the inspection and/or reparation of components related to the bearings, such as e.g. lubrication components, sealing components (to prevent lubricant leakages), etc.

The proposed beams connecting the front and rear bearing seats may enable or at least facilitate said access from inside the hub to positions close to the front and rear bearings. Depending on the space between the beams, the proposed arrangement may permit/facilitate such an access (by e.g. maintenance personnel) substantially along the complete bearing ring circumference.

In some embodiments, the plurality of beams connecting the front and rear bearing seats may comprise at least three beams. An aspect of having more than two beams may be that this may make the hub itself and the hubbearing-frame arrangement dynamically balanced. According to the present invention, each of the front and rear bearing seats may have substantially equispaced connection points at which the beams connect the bearing seats.

In examples of the hub, the front and rear bearing seats may have an identical number of connection points (at which the beams connect the bearing seats). In more particular configurations, the number of connection points of each front and rear bearing seats may be equal to the number of beams.

In some embodiments, the front and rear bearing seats may constitute a configuration of two rings with a common central axis, and the connection points of the front and rear bearing seats may be located in such a way that the beams are arranged substantially parallel to the common central axis.

In alternative configurations, however, one of the front and rear bearing seats may constitute a ring of smaller diameter than the ring constituted by the other bearing seat, such that the beams may be arranged substantially inclined with respect to the common central axis. According to the present invention, the beams are sized and the corresponding connection points are spaced in such a way that an average-size adult human can move between the beams. This way, a relatively easy access (by e.g. a repairman) from inside the hub to positions relatively close to the bearings may be permitted or at least facilitated.

According to exemplary configurations, the whole hub may be manufactured by using a single cast. Alternatively, the beams may be manufactured separately from the rest of the hub. In the case of the beams being manufactured separately from the rest of the hub, the beams may be made of a material with a greater stiffness in comparison with the stiffness of the material of the rest of the hub.

If the beams are manufactured separately from the rest of the hub, each of the beams may be coupled to the corresponding connection points by welding. Alternatively, each of the beams may be coupled to the corresponding connection points by screws, bolts or similar. In other alternative embodiments, each of the beams may be coupled to the corresponding connection points by a combination of welding and screws, bolts or similar.

In a second aspect, the invention provides a wind turbine comprising one of the previously described hubs and a frame surrounded by the hub. The hub is rotatably mounted on the frame through respective front and rear bearings, in such a way that the frame is provided at least partially internally of the hub. This wind turbine may therefore cause the bearings to operate in a rather good condition while providing or at least facilitating access (by e.g. maintenance staff) from inside the hub to locations in the vicinity of the bearings. The stiffness between the bearing seats provided by the beams may cause said good operation of the bearings. The gap(s) (i.e. free space) between the beams may enable (or at least facilitate) to reach locations close to the bearings.

The wind turbine may further comprise a first lubricant chamber for lubricating the front bearing and a second lubricant chamber for lubricating the rear bearing. The first lubricant chamber may be located at the rear side of the front bearing. The second lubricant chamber may be located at the front side of the rear bearing.

According to some configurations, the wind turbine may further comprise, for each of the first and second lubricant chambers, a sealant to seal the lubricant chamber in order to avoid lubricant leakage towards the inside of the hub.

The abovementioned lubricant chambers and/or sealants may require to be reached by e.g. maintenance staff for e.g. periodical or punctual inspections or reparations. As discussed above with respect to different examples of the hub, the gap(s) or space(s) between the beams may permit or at least facilitate said access (by corresponding personnel) from the inside of the hub to positions relatively close to the lubricant chambers and/or the sealants.

### BRIEF DESCRIPTION OF THE DRAWINGS

Particular embodiments of the present invention will be described in the following by way of non-limiting examples, with reference to the appended drawings, in which:
Figure 1 is a schematic representation of a perspective view of a hub according to an embodiment provided by the invention;
Figure 2 is a schematic representation of a perspective cutaway view of a hub similar to the one shown in Figure 1;
Figure 3 is a schematic representation of an enlarged view of a hub front region from Figure 2; and
Figure 4 is a schematic representation of an enlarged view of a hub rear region from Figure 2.

### DETAILED DESCRIPTION OF EMBODIMENTS OF THE INVENTION

In the following description, numerous specific details are set forth in order to provide a thorough understanding of examples of the present invention. It will be understood by one skilled in the art however, that examples of the present invention may be practiced without some or all of these specific details. In other instances, well known elements have not been described in detail in order not to unnecessarily obscure the description of the present invention.

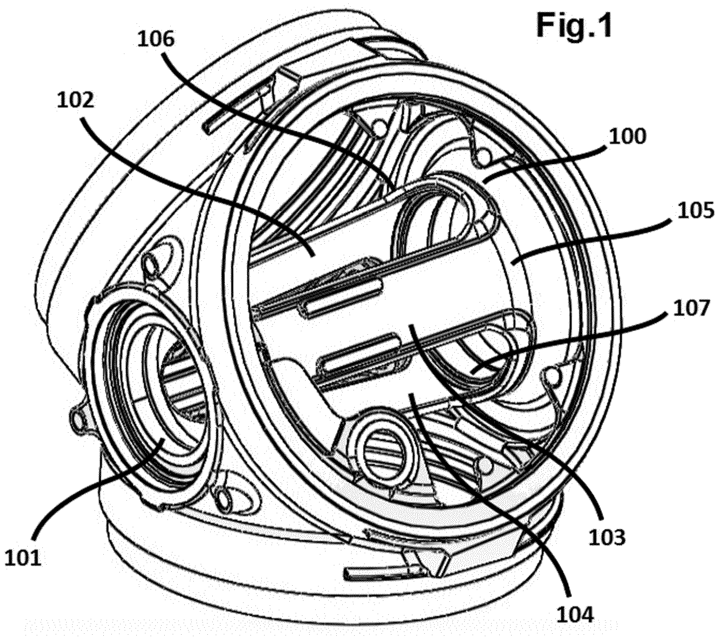

Figure 1 is a schematic representation of a perspective view of a hub according to an embodiment provided by the invention. The hub is shown having a front bearing seat 101, a rear bearing seat 100 and three beams 102, 103, 104 connecting the front and rear bearing seats 101, 100. In alternative embodiments, the hub may comprise other numbers of beams, such as e.g. four. In the particular example of this figure, the hub is not shown rotatably mounted on a corresponding frame.

The beam 102 connects the bearing seats 101, 100 at a connection point (not shown) of the front bearing seat 101 and at a connection point 106 of the rear bearing seat 100. Each of the other beams 103, 104 connects the bearing seats 101, 100 in the same way that the beam 102 does. Figure 1 further shows a corresponding connection point 105 of the beam 103 with the rear bearing seat 100, and a corresponding connection point 107 of the beam 104 with the rear bearing seat 100.

The connection points or regions 105, 106, 107 of the rear bearing seat 100 are shown substantially equispaced along the 360° of the rear bearing seat 100. The connection points (not shown) of the front bearing seat 101 may also be distributed equispaced along the 360° of the front bearing seat. In other embodiments, the connection points of the front and/or rear bearing seats may not be equispaced depending on e.g. the arrangement of other components in the hub, such as e.g. pitch boxes, supports for lubricating pitch bearings, etc.

Figure 1 shows the front and rear bearing seats 101, 100 constituting a configuration of two rings with a common central axis, wherein the ring corresponding to the front bearing seat 101 has a diameter smaller than the ring corresponding to the rear bearing seat 100. The beams 102, 103, 104 are therefore arranged substantially inclined with respect to the common central axis.

In alternative embodiments, the ring corresponding to the front bearing seat 101 and the ring corresponding to the rear bearing seat 100 may be of substantially identical diameter. Besides, the connection points 105, 106, 107 of the front and rear bearing seats 101, 100 may be located in such a way that the beams 102, 103, 104 are arranged substantially parallel to the common central axis.

The beams 102, 103, 104 may be sized and the corresponding connection points 105, 106, 107 may be spaced in such a way that an average-size adult human can move through the gaps between the beams 102, 103, 104. In other examples, the beams could be placed closer together, but still with enough empty space between them that maintenance (e.g. substituting a seal or inspection of a bearing) is possible.

The whole hub of Figure 1 (including the beams 102, 103, 104) has been manufactured by using a single cast. In other configurations, nevertheless, the beams 102, 103, 104 may be manufactured separately from the rest of the hub.

An aspect of using a single cast may be that fabrication of the hub may be simpler and cheaper. An aspect of manufacturing the beams 102, 103, 104 separately from the rest of the hub may be that different materials may be used for the beams 102, 103, 104 and for the rest of the hub. The material used for the beams 102, 103, 104 may be e.g. stiffer than the material used for fabricating the rest of the hub. For example, the beams 102, 103, 104 may be made of steel and the rest of the hub may be made of cast iron.

In case of the beams 102, 103, 104 are made of a material stiffer than the material of the rest of the hub, the beams 102, 103, 104 may be less bulky than the ones shown in Figure 1. This way, the gaps between the beams 102, 103, 104 may be larger, such that access from the inside of the hub to the vicinity of the bearing seats 100, 101 may be easier.

If the beams 102, 103, 104 are fabricated separately from the rest of the hub, each of the beams 102, 103, 104 may be coupled to the corresponding connection points 105, 106, 107 by welding. In alternative embodiments, each of the beams 102, 103, 104 may be coupled to the corresponding connection points 105, 106, 107 by respective screws, bolts or similar. In other alternative embodiments, combinations of welding and screws or bolts may be used.

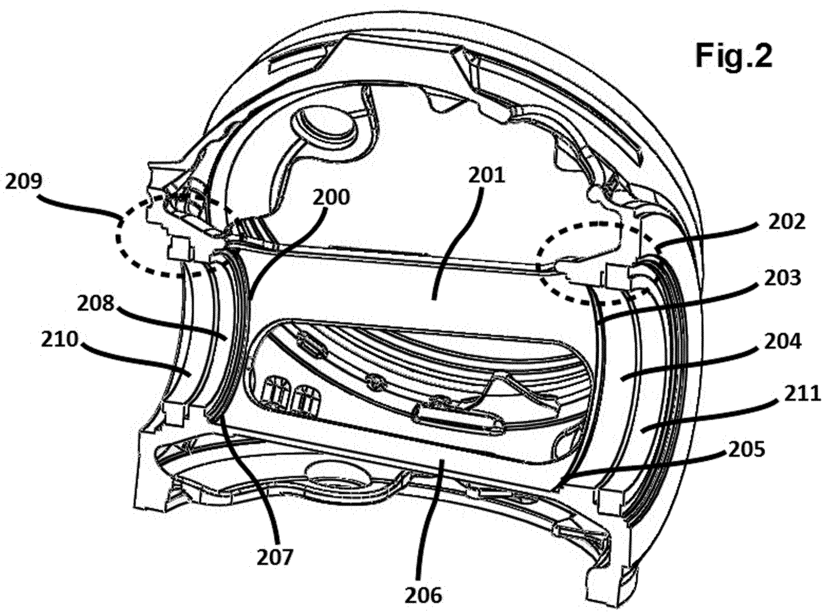

Figure 2 is a schematic representation of a perspective cutaway view of a hub similar to the one shown in Figure 1. In this view, the "partial" hub is shown having a front bearing seat 208, a rear bearing seat 204, a complete beam 201 and a "cut" beam 206. The beam 201 is shown connecting the front and rear bearing seats 208, 204 at a connection region 200 of the front bearing seat 208 and at a connection region 203 of the rear bearing seat 204. The ("cut") beam 206 is shown connecting the front and rear bearing seats 208, 204 at a connection region 207 of the front bearing seat 208 and at a connection region 205 of the rear bearing seat 204. Both the front bearing ring 210 and the rear bearing ring 211 are also shown. In this view, the hub is not shown rotatably mounted on a corresponding frame.

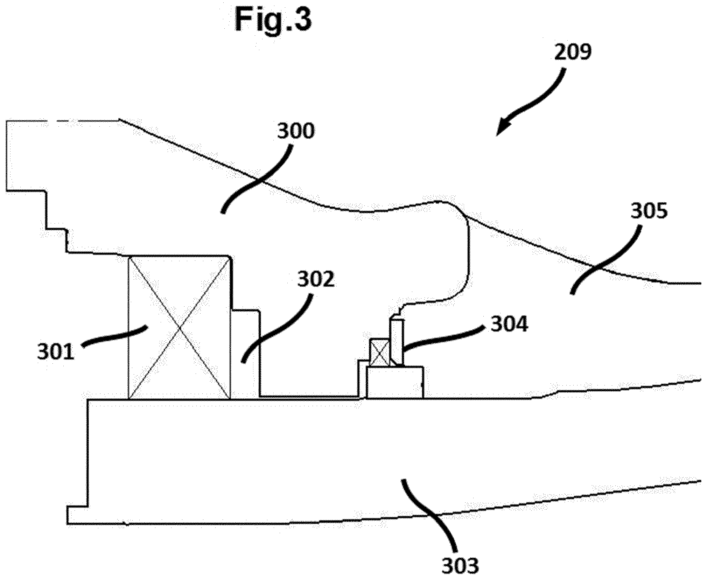

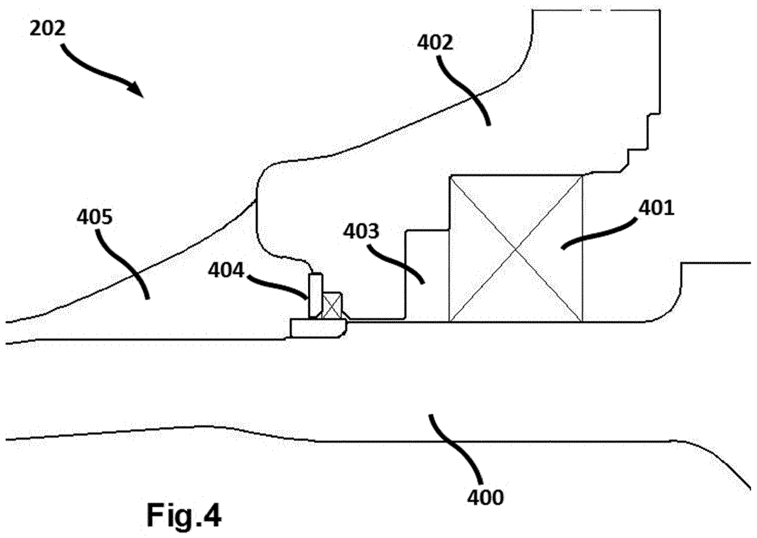

Figure 2 further shows a relevant front region 209 of the hub and a relevant rear region 202 of the hub. Said front region 209 and said rear region 202 will be described in detail bellow with reference to Figure 3 and Figure 4 respectively.

Figure 3 is a schematic representation of an enlarged view of the abovementioned hub front region 209 (of Figure 2). Figure 4 is a schematic representation of an enlarged view of the abovementioned hub rear region 202 (of Figure 2). In both figures 3 and 4, the reader must understand that the hub is rotatably mounted on a frame (portions 303, 400 of which are shown in Figures 3 and 4) in such a way that the frame is provided at least partially internally of the hub. In particular, the hub is rotatably mounted on the frame through a front bearing (a portion 301 of which is shown in Figure 3) and a rear bearing (a portion 401 of which is shown in Figure 4).

Figure 3 shows a front portion 303 of the frame, a front bearing portion 301, a front bearing seat portion 300, and a front portion 305 of a beam connecting the front bearing seat 300 and a rear bearing seat (a portion 402 of which is shown in Figure 4). Figure 3 also shows a portion 302 of a grease or oil chamber and a portion 304 of a sealing. The grease or oil chamber 302 is arranged for providing suitable lubrication to the front bearing 301, and the sealing 304 is arranged for preventing the grease/oil to leak out from the chamber 302 towards the inside of the hub.

Figure 4 shows a rear portion 400 of the frame, a rear bearing portion 401, a rear bearing seat portion 402, and a rear portion 400 of the beam connecting the front bearing seat (a portion 300 of which is shown in Figure 3) and the rear bearing seat 402. Figure 4 also shows a portion 403 of a grease or oil chamber and a portion 404 of a sealing. The grease or oil chamber 403 is arranged for providing suitable lubrication to the rear bearing 401, and the sealing 404 is arranged for preventing the grease/oil to leak out from the grease/oil chamber 403 towards the inside of the hub.

In configurations as the one depicted in Figures 3 and 4, the sealing 304, 404 may require its inspection, reparation or replacement periodically because it may deteriorate over time. The gap(s) or free space(s) between the beams 102, 103, 104 (see Figure 1) permits or at least facilitates to reach the sealing 304, 404 for its inspection, reparation or replacement. In prior art configurations based on e.g. a tubular stiffening structure there is a little space between the corresponding frame and the tubular stiffening structure, so reaching the sealing 304, 404 can be a rather complicated (even impossible) task.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. A hub to be mounted on a wind turbine having a frame to be surrounded by the hub; the hub comprising:
a front bearing seat (101) and a rear bearing seat (100) for rotatably mounting the hub on the frame through respective front and rear bearings, in such a way that the frame is provided at least partially internally of the hub; and
**characterized in that** the hub comprises a plurality of beams (102, 103, 104) connecting the front bearing seat (101) and the rear bearing seat (100) at respective connection points (105, 106, 107) of the front and rear bearing seats (101, 100), and **in that**
the beams (102, 103, 104) are sized and the corresponding connection points (105, 106, 107) are spaced in such a way that, when the hub is mounted on the wind turbine, the front and rear bearings are accessible by an average-sized adult human from inside of the hub.

2. A hub according to claim 1, wherein:
the plurality of beams connecting the front and rear bearing seats (101, 100) comprises at least three beams (102, 103, 104).

3. A hub according to any of claims 1 or 2, wherein:
each of the front and rear bearing seats (101, 100) has its connection points (105, 106, 107) substantially equispaced.

4. A hub according to any of claims 1 to 3, wherein:
the front and rear bearing seats (101, 100) have an identical number of connection points (105, 106, 107).

5. A hub according to claim 4, wherein:
the number of connection points (105, 106, 107) of each of the front and rear bearing seats (101, 100) is equal to the number of beams (102, 103, 104) connecting the front and rear bearing seats (101, 100).

6. A hub according to any of claims 4 or 5, wherein:
the front and rear bearing seats (101, 100) constitute a configuration of two rings with a common central axis;
the connection points (105, 106, 107) of the front and rear bearing seats (101, 100) are located in such a way that the beams (102, 103, 104) are arranged substantially parallel to the common central axis.

7. A hub according to any of claims 1 to 6, wherein:
the whole hub is manufactured by using a single cast.

8. A hub according to any of claims 1 to 6, wherein:
the beams (102, 103, 104) are manufactured separately from the rest of the hub.

9. A hub according to claim 8, wherein:
the beams (102, 103, 104) are made of a material with a stiffness greater than the stiffness of the material of the rest of the hub.

10. A hub according to any of claims 8 or 9, wherein:
each of the beams (102, 103, 104) is coupled to the corresponding connection points (105, 106, 107) by welding and/or by screws, bolts or similar.

11. A wind turbine comprising:
a hub according to any of claims 1 to 10; and
a frame (303, 400) surrounded by the hub;
wherein:
the hub is rotatably mounted on the frame (303, 400) through respective front and rear bearings (301, 401), in such a way that the frame (303, 400) is provided at least partially internally of the hub.

12. A wind turbine according to claim 11, further comprising:
a first lubricant chamber (302) for lubricating the front bearing (301) and a second lubricant chamber (403) for lubricating the rear bearing (401); wherein:
the first lubricant chamber (302) is located at the rear side of the front bearing (301), and the second lubricant chamber (403) is located at the front side of the rear bearing (401).

13. A wind turbine according to claim 12, further comprising:
for each of the first and second lubricant chambers (302, 403): a sealant (304, 404) to seal the lubricant chamber (302, 403) in order to avoid lubricant leakage towards the inside of the hub.

## Patentansprüche

1. Nabe, die an einer Windturbine zu montieren ist, die einen Rahmen aufweist, der von der Nabe zu umschließen ist; wobei die Nabe Folgendes umfasst:
einen vorderen Lagersitz (101) und einen hinteren Lagersitz (100), um die Nabe drehbar an dem Rahmen durch jeweilige vordere und hintere Lager zu lagern, so dass der Rahmen zumindest teilweise im Inneren der Nabe bereitgestellt wird; und
**dadurch gekennzeichnet, dass** die Nabe mehrere Balken (102, 103, 104) umfasst, die den vorderen Lagersitz (101) und den hinteren Lagersitz (100) an jeweiligen Verbindungsstellen (105, 106, 107) des vorderen und hinteren Lagersitzes (101, 100) verbindet, und **dass**
die Balken (102, 103, 104) derart bemessen und die entsprechenden Verbindungsstellen (105, 106, 107) derart beabstandet sind, dass, wenn die Nabe an der Windturbine montiert ist, das vordere und das hintere Lager von einem erwachsenen Menschen mit durchschnittlicher Größe von innerhalb der Nabe zugänglich sind.

2. Nabe nach Anspruch 1, wobei:
die mehreren Balken, die den vorderen und den hinteren Lagersitz (101, 100) verbinden, mindestens drei Balken (102, 103, 104) umfassen.

3. Nabe nach einem der Ansprüche 1 oder 2, wobei:
die Verbindungsstellen (105, 106, 107) von jedem des vorderen und hinteren Lagersitzes (101, 100) im Wesentlichen abstandsgleich sind.

4. Nabe nach einem der Ansprüche 1 bis 3, wobei:
der vordere und der hintere Lagersitz (101, 100) eine identische Anzahl an Verbindungsstellen (105, 106, 107) aufweisen.

5. Nabe nach Anspruch 4, wobei:
die Anzahl an Verbindungsstellen (105, 106, 107) von jedem des vorderen und hinteren Lagersitzes (101, 100) der Anzahl an Balken (102, 103, 104) entspricht, die den vorderen und hinteren Lagersitz (101, 100) verbinden.

6. Nabe nach einem der Ansprüche 4 oder 5, wobei:
der vordere und der hintere Lagersitz (101, 100) eine Konfiguration aus zwei Ringen mit einer gemeinsamen zentralen Achse bilden;
die Verbindungsstellen (105, 106, 107) des vorderen und des hinteren Lagersitzes (101, 100) derart liegen, dass die Balken (102, 103, 104) im Wesentlichen parallel zu der gemeinsamen zentralen Achse angeordnet sind.

7. Nabe nach einem der Ansprüche 1 bis 6, wobei:
die gesamte Nabe durch Verwenden eines einzigen Gussstücks hergestellt ist.

8. Nabe nach einem der Ansprüche 1 bis 6, wobei:
die Balken (102, 103, 104) von dem Rest der Nabe getrennt hergestellt sind.

9. Nabe nach Anspruch 8, wobei:
die Balken (102, 103, 104) aus einem Material mit einer Steifigkeit, die größer als die Steifigkeit des Materials des Rests der Nabe ist, hergestellt sind.

10. Nabe nach einem der Ansprüche 8 oder 9, wobei:
jeder der Balken (102, 103, 104) mit den entsprechenden Verbindungsstellen (105, 106, 107) durch Schweißen und/oder durch Schrauben, Bolzen oder Ähnliches gekoppelt ist.

11. Windturbine umfassend:
eine Nabe nach einem der Ansprüche 1 bis 10; und
einen Rahmen (303, 400), der von der Nabe umschlossen ist;
wobei:
die Nabe drehbar auf dem Rahmen (303, 400) durch ein jeweiliges vorderes und hinteres Lager (301, 401) gelagert ist, so dass der Rahmen (303, 400) zumindest teilweise im Inneren der Nabe bereitgestellt ist.

12. Windturbine nach Anspruch 11, ferner umfassend:
eine erste Schmiermittelkammer (302) zum Schmieren des vorderen Lagers (301) und eine zweiten Schmiermittelkammer (403) zum Schmieren des hinteren Lagers (401);
wobei:
die erste Schmiermittelkammer (302) auf der Rückseite des vorderen Lagers (301) liegt, und die zweite Schmiermittelkammer (403) auf der Vorderseite des hinteren Lagers (401) liegt.

13. Windturbine nach Anspruch 12, ferner umfassend:
für jede der ersten und zweiten Schmiermittelkammer (302, 403): ein Dichtungsmittel (304, 404), um die Schmiermittelkammer (302, 403) abzudichten, um eine Schmiermittelleckage ins Innere der Nabe zu vermeiden.

## Revendications

1. Moyeu destiné à être monté sur une éolienne ayant un châssis destiné à être entouré par le moyeu ; le moyeu comprenant :
une chaise de palier avant (101) et une chaise de palier arrière (100) pour le montage de manière rotative du moyeu sur le châssis moyennant des paliers avant et arrière respectifs, de telle sorte que le châssis est pourvu au moins partiellement à l'intérieur du moyeu ; et
**caractérisé en ce que** le moyeu comprend une pluralité de poutres (102, 103, 104) reliant la chaise de palier avant (101) et la chaise de palier arrière (100) à des points de raccordement respectifs (105, 106, 107) des chaises de palier avant et arrière (101, 100), et **en ce que**
les poutres (102, 103, 104) sont dimensionnées et les points de raccordement correspondants (105, 106, 107) sont espacés de telle sorte que, lorsque le moyeu est monté sur l'éolienne, les paliers avant et arrière sont accessibles par un homme adulte de taille moyenne depuis l'intérieur du moyeu.

2. Moyeu selon la revendication 1, dans lequel :
la pluralité de poutres reliant les chaises de palier avant et arrière (101, 100) comprennent au moins trois poutres (102, 103, 104).

3. Moyeu selon l'une quelconque des revendications 1 ou 2, dans lequel :
chacune des chaises de palier avant et arrière (101, 100) a ses points de raccordement (105, 106, 107) sensiblement équitablement espacés.

4. Moyeu selon l'une quelconque des revendications 1 à 3, dans lequel :
les chaises de palier avant et arrière (101, 100) ont un nombre identique de points de raccordement (105, 106, 107).

5. Moyeu selon la revendication 4, dans lequel :
le nombre de points de raccordement (105, 106, 107) de chacune des chaises de palier avant et arrière (101, 100) est égal au nombre de poutres (102, 103, 104) reliant les chaises de palier avant et arrière (101, 100).

6. Moyeu selon l'une quelconque des revendications 4 ou 5, dans lequel :
les chaises de palier avant et arrière (101, 100) constituent une configuration de deux anneaux avec un axe central commun ;
les points de raccordement (105, 106, 107) des chaises de palier avant et arrière (101, 100) sont situés de telle sorte que les poutres (102, 103, 104) sont disposées sensiblement parallèles à l'axe central commun.

7. Moyeu selon l'une quelconque des revendications 1 à 6, dans lequel :
tout le moyeu est fabriqué en utilisant un seul moule.

8. Moyeu selon l'une quelconque des revendications 1 à 6, dans lequel :
les poutres (102, 103, 104) sont fabriquées séparément du reste du moyeu.

9. Moyeu selon la revendication 8, dans lequel :
les poutres (102, 103, 104) sont réalisées dans un matériau ayant une rigidité plus importante que la rigidité du matériau du reste du moyeu.

10. Moyeu selon l'une quelconque des revendications 8 ou 9, dans lequel :
chacune des poutres (102, 103, 104) est couplée aux points de raccordement correspondants (105, 106, 107) par soudure et/ou par vis, boulons ou similaire.

11. Éolienne comprenant :
un moyeu selon l'une quelconque des revendications 1 à 10 ; et
un châssis (303, 400) entouré par le moyeu ;
dans laquelle :
le moyeu est monté de manière rotative sur le châssis (303, 400) moyennant des paliers avant et arrière (301, 401) respectifs, de telle sorte que le châssis (303, 400) est pourvu au moins partiellement à l'intérieur du moyeu.

12. Éolienne selon la revendication 11, comprenant en outre :
une première chambre de lubrifiant (302) pour lubrifier le palier avant (301) et une deuxième chambre de lubrifiant (403) pour lubrifier le palier arrière (401) ;
dans laquelle :
la première chambre de lubrifiant (302) est située sur le côté arrière du palier avant (301), et la deuxième chambre de lubrifiant (403) est située sur le côté avant du palier arrière (401).

13. Éolienne selon la revendication 12, comprenant en outre :
pour chacune des première et deuxième chambres de lubrifiant (302, 403) : un scellant (304, 404) pour sceller la chambre de lubrifiant (302, 403) afin d'éviter une fuite de lubrifiant vers l'intérieur du moyeu.
